Europäisches Patentamt

(19) European Patent Office  (11) Numéro de publication: **0 059 120**
**B1**
Office européen des brevets

(12) **FASCICULE DE BREVET EUROPEEN**

(45) Date de publication du fascicule du brevet:
02.10.85

(51) Int. Cl.⁴: **G 01 C 21/22,** G 09 G 1/28,
H 04 N 11/06, H 04 N 1/46

(21) Numéro de dépôt: **82400142.4**

(22) Date de dépôt: **26.01.82**

(54) Appareil indicateur cartographique, notamment pour la navigation aérienne.

(30) Priorité: **10.02.81 FR 8102595**

(43) Date de publication de la demande:
**01.09.82 Bulletin 82/35**

(45) Mention de la délivrance du brevet:
**02.10.85 Bulletin 85/40**

(84) Etats contractants désignés:
**DE GB IT SE**

(56) Documents cités:
**EP - A - 0 023 861**
**WO - A - 79/00175**
**FR - A - 2 357 022**
**FR - A - 2 487 616**
**US - A - 3 710 011**
**US - A - 3 761 607**

(73) Titulaire: **THOMSON-CSF, 173, Boulevard Haussmann,
F-75379 Paris Cedex 08 (FR)**

(72) Inventeur: **Reymond, Jean-Claude, THOMSON-CSF
SCPI 173, bld Haussmann, F-75360 Paris Cedex 08 (FR)**
Inventeur: **Brisseau, Christian, THOMSON-CSF
SCPI 173, bld Haussmann, F-75360 Paris Cedex 08 (FR)**

(74) Mandataire: **Trocellier, Roger et al, THOMSON-CSF
SCPI 173, Bld Haussmann, F-75379 Paris Cedex 08 (FR)**

BUNDESDRUCKEREI BERLIN

## Description

La présente invention a trait aux appareils indicateurs cartographiques selon le préambule de la revendication 1, et notamment ceux pour la navigation aérienne dans lesquels une carte géographique, préalablement enregistrée sur un support optique, magnétique ou autre, est analysée par un lecteur pour sélectionner la zone utile de carte à visualiser et la traduire sous forme de signaux vidéo aptes à une visualisation en couleur sur un indicateur cathodique.

Les indicateurs cartographiques présentant l'image d'une carte géographique aux pilotes de certains véhicules sont de plus en plus utilisés, en particulier dans le domaine aéronautique.

L'invention s'applique plus particulièrement dans ce domaine à réaliser un dispositif indicateur électronique de navigation aérienne. Un indicateur cartographique sert essentiellement à présenter au pilote de l'avion la carte géographique de la zone survolée. La zone visualisée défile en correspondance avec le vol et son positionnement est asservi à la longitude et à la latitude de l'avion et éventuellement au cap. Outre la carte géographique, le dispositif de navigation est agencé pour visualiser conjointement des repères et symboles pour indiquer le point figuratif de l'avion ainsi que des informations de navigation (vitesse, consommation de carburant, route à suivre, etc...).

Il est connu par le brevet français FR-A-2 357 022 un appareil indicateur cartographique où la carte est enregistrée sur un support optique, en l'occurence un film photographique. Dans le cas d'un film couleur, le lecteur assurant l'analyse du film comporte un séparateur spectral suivi des détecteurs photoélectriques, ou capteurs, au nombre de trois pour produire les signaux vidéo respectifs rouge R, vert V et bleu B nécessaires à la présentation couleur. Ces détecteurs qui fonctionnent chacun dans une bande spectrale déterminée sont constitués, soit par des caméras de télévision, soit par des photomultiplicateurs, selon que le lecteur utilise une simple source lumineuse ou bien un tube d'analyse à spot mobile, dit flying-spot. Outre les composants détecteurs, le lecteur comporte les circuits de commande des caméras ou du tube flying-spot, ainsi que des circuits d'amplification vidéo.

Pour d'autres solutions utilisant un support magnétique, par exemple celle décrite dans le brevet français FR-A-2 461 305 où la carte est enregistrée sur vidéodisque, il est également nécessaire de produire la distribution des trois couleurs au niveau du support pour extraire ensuite les trois voies vidéo.

Il est décrit par ailleurs, dans le brevet US-A-3 710 011 un système qui utilise une source d'image monochrome et établit une correspondance prédéterminée entre l'amplitude du signal et les couleurs. Ceci revient à coder différents niveaux de gris auxquels on assigne ensuite à chacun une couleur distincte prédéterminée pour la visualisation. Il s'ensuit que l'image visualisée en couleur ne correspond généralement pas à la scène observée car le procédé utilisé n'établit pas de correspondance couleur-couleur mais une correspondance amplitude-couleur, or l'amplitude du signal monochrome initial ne peut pas identifier la couleur initiale du point correspondant de la scène.

Suivant l'invention, comme on le verra ultérieurement, en opérant dans des conditions semblables, c'est-à-dire avec une information monochrome au départ, l'information de couleur est préservée car chaque niveau de gris correspond à une couleur initiale et non à une amplitude. Les N couleurs distinctes du document sont traduites en N gris et le document peut être reproduit avec ses couleurs initiales ou avec des couleurs modifiées, au gré de l'exploitant.

Le but de l'invention est d'apporter des perfectionnements permettant de restituer l'information de couleur ou la modifier tout en diminuant l'encombrement des matériels et leur consommation par réduction du nombre de composants électroniques, ce qui augmente la fiabilité, ces impératifs étant primordiaux pour des applications telles que celles relatives à du matériel aéroporté.

L'utilisation de la couleur pour les cartes géographiques permet la distinction aisée des différents détails à représenter et est une manière de coder ces détails: routes en rouge, bois en vert, hydrographique en bleu, etc... L'invention s'appuie sur la remarque que le document couleur constitué par une carte géographique ne comporte en fait qu'un nombre N limité de couleurs distinctes bien définies. Le nombre N est généralement assez voisin de dix. Par couleurs distinctes, on entend aussi bien des couleurs nettement différentes telles qu'un tracé jaune et un autre en rouge, et celles qui dérivent d'une même couleur mais se distinguent par la nuance ou la teinte, par exemple une gamme des bleus entre un bleu clair et un bleu foncé. En fait tous les points d'une même couleur ou d'une même teinte sont identiques des points de vue chrominance et luminance. Il en résulte que les signaux vidéo R, V, B en sortie de l'analyseur vont également consister en N configurations distinctes au cors de l'analyse du document, chaque configuration R, V, B étant connue et correspondant à une couleur ou teinte analysée.

Il résulte également de la propriété précitée présentée par tels documents que les couleurs sont spectralement bien déterminées et reproductibles, l'intensité de chaque couleur étant connue à l'avace, et que la reproduction de ces couleurs ou d'autres ne comportera qu'un nombre défini des combinaisons d'intensité des trois couleurs R, V, B de base, ces combinaisons pouvant être connues à l'avance.

Selon l'invention ce but est atteint, dans un appareil du genre susmentionné, par les caractéristiques techniques figurant dans la partie ca- ractérisante de la revendication 1.

Des particularités avantageuses de l'invention apparaîtront dans la description qui suit, donnée à titre d'exemple non limitatif, à l'aide des figures annexées qui représentent:

Fig. 1, un diagramme d'un mode préféré de réalisation d'un appareil indicateur cartographique conforme à l'invention;

Fig. 2, un diagramme d'un deuxième mode de réalisation de l'appareil selon l'invention;

Fig. 3, un schéma d'une réalisation d'un film optique pour l'appareil selon Fig. 1 ou 2;

Fig. 4, un diagramme d'un dispositif d'enregistrement sur film optique de la carte, pour un indicateur cartographique selon l'invention;

Fig. 5, un diagramme d'une variante de réalisation relative à un appareil utilisant un enregistrement de carte sur un support magnétique.

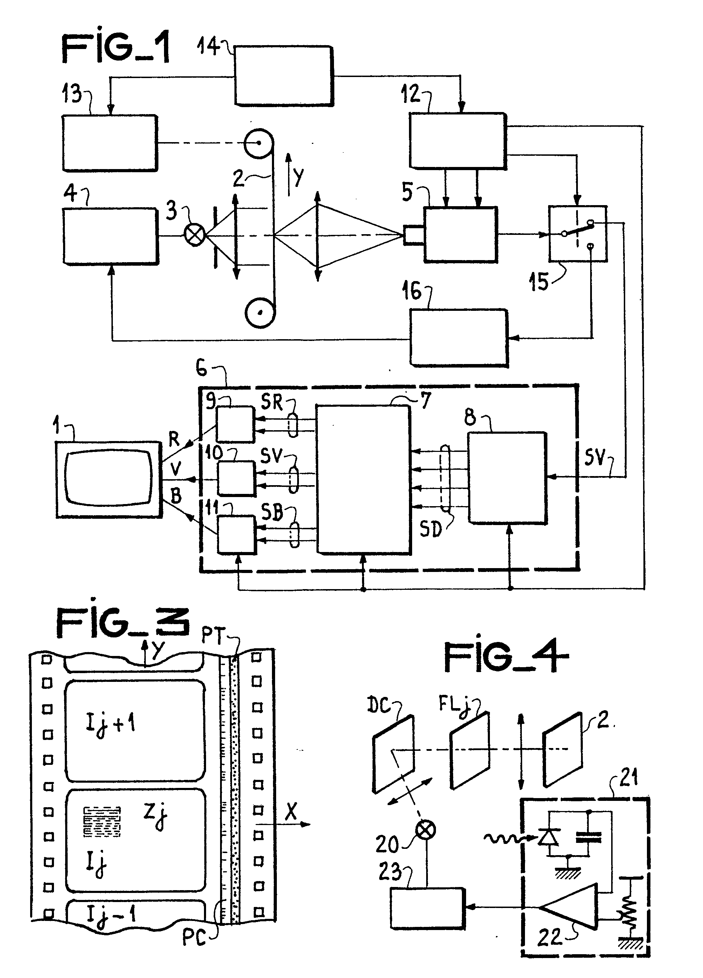

En se reportant à la Fig. 1, l'appareil indicateur cartographique comporte des moyens d'analyse ou lecteur, dont les sorties R, V, B alimentent un indicateur cathodique couleur 1, tel un moniteur de télévision couleur.

La carte géographique, ou tout autre document qui ne présente qu'un nombre limité de couleurs, est enregistrée sur un moyen support 2. Dans le cas de la Fig. 1 il s'agit d'un film optique et pour en effectuer la lecture, l'appareil comporte une source lumineuse 3 avec son alimentation 4, des éléments optiques et des moyens de photodétection et d'analyse 5. Dans une version à tube flying-spot (Fig. 2) l'analyse généralement ligne par ligne de la zone utile est commandée au niveau de la source.

Conformément à l'invention, les moyens détecteurs 5 dits capteurs, sont en nombre réduit. Ceci résulte de la transcription particulière faîte du document sur le support 2 en utilisant un nombre réduit de composantes chromatiques, soit deux composantes couleur, soit l'unique composante de luminance. Cette dernière formule (Fig. 1) est préférée car elle conduit à utiliser un seul capteur, une caméra d'images vidéo dans la version de la Fig. 1 ou un photomultiplicateur si la source est un tube flying-spot.

La formule à deux composantes chromatiques (Fig. 2) nécessite deux capteurs, deux caméras vidéo pour un lecteur à source fixe, ou deux photomultiplicateurs avec un tube flying-spot.

Ainsi le nombre de voies vidéo issues du capteur se trouve réduit d'autant que celui des composantes utilisées pour l'enregistrement et le matériel se trouve simplifié. Il est nécessaire d'identifier et restituer la couleur désirée pour chaque point de l'image et le lecteur est doté de moyens d'identification et de resitution 6 qui peuvent être réalisés de manière simple et sous un faible volume.

Dans la version représentée sur la Fig. 1 le film est monochrome, noir et blanc; l'information s'y trouve stockée selon différents niveaux de gris. Ces niveaux sont prédéterminés en relation avec les différentes couleurs C1 à CN à traduire, N étant le nombre de couleurs distinctes du document. Chaque couleur Cj est affectée à une valeur de densité Dj déterminée du film, c'est-à-dire à un certain niveau de gris dans la gamme allant du noir au blanc. Les valeurs extrêmes D1 à DN peuvent correspondre sensiblement à ces limites. La plage D1 à DN sera prise par exemple entre une valeur de densité proche de zéro et l'autre valeur choisie entre 2 et 3 pour un film courant.

Ainsi, la combinaison initiale d'une couleur Cj constituée de X % de rouge R, Y % de vert V et Z % du bleu B est remplacée par une nouvelle combinaison Dj que ne comporte plus qu'un seul paramètre à identifier et consécutivement ne nécessite qu'une seule voie détectrice.

Le film monochromatique 2 est lu par le capteur unique 5 sensible uniquement à l'intensité de la lumière qui traverse l'image enregistrée. L'élément 5 peut donc consister en une caméra TV noir et blanc.

Le signal vidéo SV issu de la caméra est traité dans les circuits 6 d'identification et de restitution. L'amplitude de ce signal, en supposant l'émission de la source 3 uniforme, est une fonction monotone décroissante connue de la densité Dj et a valeur permet donc d'identifier la couleur Cj correspondante. On verra ultérieurement à l'aide de la Fig. 4 comment former les densités pour obtenir des niveaux de signaux SV régulièrement espacés et permettre ainsi l'identification immédiate des couleurs sans codage intermédiaire. Une table de correspondance de niveau SV à couleur Cj permet de faire correspondre ensuite à chaque couleur identifiée une combinaison R, V, B prédéterminée pour la visualisation cathodique. Ceci est réalisé aisément avec une mémoire morte programmée 7, du type PROM par exemple, moyennant conversion analogique-numérique préalable en 8 à l'entrée et conversion inverse en 9—10—11 en sortie, d'autant que le nombre N est réduit et généralement inférieur à seize soit quatre bits. Ainsi le convertisseur 8 peut fournir l'information Dj détectée sous forme d'un mot binaire de quatre bits SD à la mémoire 7 qui, selon la table mémorisée, y fait correspondre trois mots binaires correspondant aux paramètres R, V, B. Ces mots SR, SV, SB peuvent avoir un nombre très réduit de bits, deux par exemple pour y choisir seize combinaisons parmi les soixante quatre possibles; avec trois bits le choix se fait parmi cinq cent douze combinaisons possibles et peut donc être beaucoup plus affiné. Les convertisseurs numérique-analogique de sortie 9, 10 et 11 reproduisent les valeurs analogiques R, V, B pour l'utilisation. A noter que la combinaison restituée ne sera pas généralement exactement celle X, Y, Z de la valeur originale Cj du document; elle pourra s'en approcher dans le cas d'une restitution fidèle mais pourra également s'en écarter assez si l'exploitant désire modifier la couleur originelle, voire s'en écarter franchement et correspondre à une autre couleur. La table de couleur est préalablement déterminée dans le sens désiré pour l'exploitation.

Pour les techniques de représentation modifiées, dites de fausse couleur, on pourra se reporter notamment au document de brevet EP-A-0 023 861 (l'état de la technique selon l'artricle 54(3) CBE).

La fidélité de la reproduction ou un degré élevé dans le choix des nuances reproductibles, est lié au nombre de bits utilisés pour le transcodage de l'information d'entrée dans la mémoire 7 en l'information de sortie SR,SV, SB. Le nombre de bits du mot SD d'entrée est lui, fonction uniquement de la valeur N. En considérant un exemple simple avec $N = 8$, le mot SD comporte trois bits pour coder les différentes couleurs du document: 000 noir, 001 violet, 010 bleu, 011 vert, 100 jaune, 101 rouge et 111 blanc. Ce codage est obtenu dans le circuit 8. La mémoire 7 comporte huit combinaisons SR,SV,SB stockées correspondant respectivement à ces valeurs 000 à 111; par exemple avec deux bits, pour un point violet 001, la combinaison peut être la suivante:

$SR = 10$, $SV = 00$, $SB = 10$ soit un signal de visualisation composé de 50% de rouge et 50% de bleu.

Les autres éléments représentés sur la Fig. 1 désignent un circuit 12 générateur des signaux de cynchronisation de l'ensemble et des signaux de balayage de la caméra 5, un circuit d'asservissement 13 de potitionnement du film et un circuit de commande 14 pour sélectionner en x et en Y la zone utile à analyser. Dans le cas d'un indicateur cartographique de bord, le circuit 14 est un calculateur qui élabore les ordres de commande en fonction de l'évolution de l'avion. Ces circuits ne sont pas décrits dans le détail, on pourra se reporter par exemple à la demande de brevet français FR-A-2 357 022 et déposée le 2 juillet 1976. Le circuit 12 pilote les circuits 6 à la cadence point.

La stabilité de l'émission lumineuse peut être obtenue par une piste de test PT portée par le film et dont la densité est connue. Cette piste est lue séquentiellement, par exemple à chaque retour vertical de trame, ou après un certain nombre d'images. Le signal vidéo correspondant est dérivé par un circuit d'aiguillage 15 qui commute la sortie vidéo de la caméra 5 vers un circuit de commande 16 du réglage de l'intensité de la source 3. Le circuit 15 est synchronisé à la cadence désirée par le circuit 12. Le circuit 16 peut consister en un comparateur à seuil dont la sorte amplifiée va commander le circuit d'alimentation pour asservir le débit alimentant la source 3. Le réglage préalable est obtenu par ajustage de la valeur du seuil du comparateur.

La Fig. 3 représente une portion de film avec des voies successives $lj-1$, $lj$, $lj+1$ enregistrées de la carte, une piste codée PC pour l'identification des voies, et la piste de test PT précitée. La zone Zj correspond à celle en cours d'analyse déterminée par déplacement en X et en Y du film.

La Fig. 4 illustre un mode de réalisation préalable du film monochromatique 2. Le filtre FLj permet de sélectionner les zones du document de couleur Cj. Le document est éclairé par la source 20. Un posemètre 21 symbolisé par une diode détectrice, un condensateur et un comparateur à seuil 22, détermine la durée d'exposition. Cette durée est réglée par étalonnement de la valeur de seuil du comparateur 22 pour produire la densité Dj désirée correspondante sur le film 2. Le posemètre contrôle l'alimentation 23 de la source. Cette solution nécessite le changement du filtre FLj pour chaque couleur soit N filtrages et N expositions. De manière préférée les filtres $FL_1$ à $FL_N$ sont remplacés par un unique filtre multicouches pour obtenir le film 2 avec une seule exposition. Dans l'une ou l'autre solution, le filtrage est tel que, si on appelle Lj la luminance résultant de la couleur Cj et $\tau j$ la transmission du filtre pour la couleur Cj, les valeurs $\tau j \times Lj$ forment une échelle linéaire en luminance.

En conséquence, aux différentes couleurs C1 à CN correspondent, à la lecture du film, des valeurs de signal détecté échelonnées régulièrement, avec un incrément d'amplitude constant. Dans ces conditions, le circuit d'entrée 8 de la mémoire d'identification et de restitution 7 est un simple convertisseur analogique numérique et ne nécessite pas, en outre, un codeur à haute résolution.

La Fig. 2 a trait à un appareil indicateur cartographique où le support mémoire est constitué par un film optique couleur 30 sur lequel les couleurs Cj sont traduites par deux composantes chromatiques, de préférence des composantes choisies dans les spectres des couleurs V et B. Le film 30 est réalisé selon la méthode précédemment décrite en utilisant un filtre multicouches adapté pour éliminer totalement la composante non retenue, en l'occurrence une band spectrale située dans le rouge. Chaque point est ainsi défini par deux paramètres Y % de V et Z % de B, la densité Dj résultant de la somme Y + Z étant déterminée au préalable (Fig. 4). De manière à utiliser deux photomultiplicateurs 31 et 32 à la place de deux caméras vidéo la source est du type à tube flying-spot 33. Les circuits d'alimentation de balayage 34 du tube sont synchronisés par le circuit de synchronisation 35. Le montage optique 36 sépare les faisceaux V et B de bande spectrale différente vers les capteurs 31 et 32 respectifs. Le convertisseur analogique-numérique d'entrée est ici doublé en deux circuits 8A, 8B pour recevoir les deux voies vidéo. La boucle de stabilisation de la source comporte un double commutateur 36 et le circuit de commande 37 qui contrôle le circuit d'alimentation 34 pour agir sur l'intensité du spot. Le circuit 37 peut être identique à celui 16 de la Fig. 1 et ne comporter qu'une entrée dans la mesure où la piste du test du film est formée avec une seule des composantes V ou B sélectionnées.

La variante Fig. 2 présente les avantages suivants: lecture de régions spectrales performantes; gain de place par rapport au système conventionnel à trois capteurs; le nombre d'information reçues à l'entrée des circuits 6 est deux fois plus grand, d'où une plus grande sécurité de fonctionnement et de codage, rendant le système mieux protégé contre des variations éventuelles de densité du film, dues à son vieillissement par exemple. Par contre, comparé à la version précédente (Fig. 1) il présente les inconvénients d'utiliser un film couleur au lieu d'un film monochromatique et deux capteurs au lieu d'un.

La présente invention n'est pas limitée aux appareils inducteurs cartographiques où la mémoire de masse est un support optique et concerne également les autres variantes, à bande magnétique, à vidéo disque, etc. . .

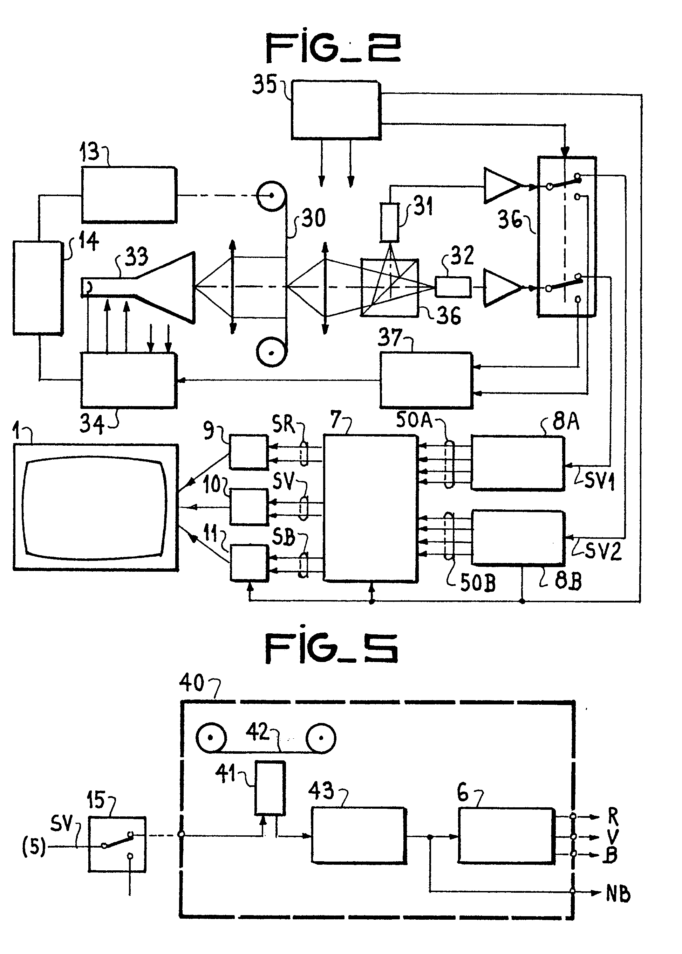

La Fig. 5 a trait à un appareil à bande magnétique qui peut être réalisé à partir d'un simple magnétoscope noir et blanc 40 équipé en complément avec les circuits d'identification et de restitution 6 de la Fig. 1. L'enregistrement de la bande est réalisable aisément à partir du film monochrome 2 et le lecteur selon la Fig. 1 en appliquant le signal SV détecté à l'entrée correspondant du magnétoscope qui alimente la tête d'écriture 41. Ainsi, l'image couleur initiale est stockée sur une piste unique de la band magnétique 42. Lors de la lecture, la tête 41 délivre le signal de lecture aux circuits 43 du magnétoscope et la voie vidéo de sortie est traitée comme précédemment pour obtenir les signaux R, V, B.

Les avantages procurés par un appareil conforme à l'invention sont les suivants: un seul capteur et une seule chaîne d'amplification vidéo pour la variante préférée; réduction du nombre de composants; simplification des circuits; augmentation de la fiabilité; possibilité immédiate de modification des couleurs de la carte; remplacement d'une mémoire organisée pour un enregistrement couleur par une mémoire susceptible seulement d'enregistrer un signal monochrome (par exemple utilisation d'un film noir et blanc); possibilité de meilleure adaption de la source de lecture au domaine de sensibilité du récepteur dans le cas de lecture optique.

**Revendications**

1. Appareil indicateur pour la visualisation d'un document du type document cartographique qui est susceptible de ne présenter qu'un nombre limité N de couleurs distinctes auxquelles correspondent N combinaisons prédéterminées des composants chromatiques conventionelles rouge R, vert V et bleu B, ledit document étant mémorisé sur un moyen support, l'appareil comportant un dispositif d'analyse dit lecteur pour sélectionner sur le moyen support la zone utile à visualiser dans ce document, en effectuer la lecture point par point et pour délivrer sur trois voies vidéo les composants chromatiques détectés R, V, B à un dispositif de visualisation sur tube cathodique couleur, l'appareil étant caractérisé en ce que l'information couleurs dudit document est mémorisée en utilisant au plus deux composantes chromatiques, les N couleurs (C1 à CN) du document étant déterminées par N combinaisons distinctes desdites au plus deux composantes chromatiques utilisées, le dispositif d'analyse étant consécutivement équipé de au plus deux voies vidéo de détection et de moyens d'identification et de restitution de couleur (6) pour traiter les signaux issus de ces voies par identification point par point et en temps réel desdites combinaisons distinctes et pour leur faire correspondre respectivement celle des N combinaisons prédéterminées des composantes R, V, B servant à la visualisation, sur lesdites trois voies vidéo, de la couleur désirée pour la représentation.

2. Appareil selon la revendication 1, caractérisé en ce que les moyens d'identification et de restitution comportent un convertisseur analogique-numérique (8, 8A—8B) d'entrée pour chaque voie vidéo détectée, une mémoire morte programmée (7) alimentée par les sorties numériques (SD, SDA—SDB) et délivrant trois mots binaires appliqués à trois convertisseurs numérique-analogique (9, 10, 11) de sortie, la mémoire morte étant progammée selon une table prédéterminée de correspondance des dites N combinaisons distinctes auxdites N combinaisons prédéterminées des R, V, B désirées pour la visualisation.

3. Appareil selon la revendication 1 ou 2, caractérisé en ce que le document est mémorisé sur le moyen support en utilisant l'unique composante de luminance, et les moyens d'analyse ne comportent qu'une voie vidéo détectée (SV).

4. Appareil selon la revendication 3, caractérisé en ce que le moyen support est un film optique noir et blanc où lesdites N combinaisons distinctes forment N densités distinctes (D1 à DN).

5. Appareil selon la revendication 4, caractérisé en ce que les densités sont prédéterminées pour produire une variation linéaire par palier du signal détecté selon une échelle à incrément constant.

6. Appareil selon la revendication 4 ou 5, caractérisé en ce que le dispositif d'analyse comporte dans une version à tube d'analyse à spot mobile, un dispositif détecteur constitué par un simple photomultiplicateur et dans une version à source lumineuse (2), un dispositif lecteur constitué par une caméra TV noir et blanc (5).

7. Appareil selon la revendication 1 ou 2, caractérisé en ce que le document est mémorisé avec compression de spectre couleur sur le moyen support en utilisant deux composantes chromatiques, de préférence situées dans le vert et le bleu.

8. Appareil selon la revendication 7, caractérisé en ce que le moyen support est un film couleur (30) ou lesdites N combinaisons distinctes des deux composantes utilisées forment N densités distinctes.

9. Appareil selon l'une quelconque des revendications 4, 5, 6 et 8, caractérisé en ce que le film comporte une piste de test (PT) de densité connue pour produire par lecture périodique de cette piste un asservissement de luminosité de la source d'analyse (3, 33) du lecteur.

10. Appareil selon la revendication 3, caractérisé en ce que le moyen support est une bande magnétique (42) comportant le document couleur enregistré sur une piste unique par l'intermédiaire d'un lecteur vidéo de film noir et blanc où le document a été préalablement enregistré en utilisant N densités distinctes correspondant auxdites combinaisons distinctes, l'appareil comportant un magnétoscope (40) noir et blanc équipé de ladite bande et desdits moyens d'identification et de restitution de couleur (6).

## Patentansprüche

1. Anzeigegerät für ein Dokument kartographischer Art, das nur eine beschränkte Anzahl von N verschiedenen Farben aufweisen soll, denen N vorbestimmte Kombinationen der herkömmlichen Farbkomponenten Rot R, Grün G und Blau B entsprechen, wobei dieses Dokument auf einer Trägereinrichtung gespeichert ist, wobei ferner das Gerät eine als Leser bezeichnete Analysevorrichtung umfaßt, um auf der Trägereinrichtung die nutzbare, in diesem Dokument anzuzeigende Zone auszuwählen, indem punktweise ausgelesen wird und auf drei Videokanälen die erfaßten Farbkomponenten R, G und B an eine Farb-Katodenstrahlröhren-Anzeigevorrichtung ausgegeben werden, und wobei das Gerät ferner dadurch gekennzeichnet ist, daß die Farbinformation des genannten Dokumentes gespeichert wird, indem höchstens zwei Farbkomponenten verwendet werden, wobei die N Farben (C1 bis CN) des Dokumentes durch N verschiedene Kombinationen der genannten, höchstens zwei verwendeten Farbkomponenten bestimmt werden, wobei die Analysevorrichtung weiterhin mit höchstens zwei Video-Erfassungskanälen sowie Farb-Identifikations- und Wiedergabemitteln (6) versehen ist, um die von diesen Kanälen ausgehenden Signale durch punktweise Identifikation der genannten verschiedenen Kombinationen in Realzeit zu verarbeiten und um die Entsprechung mit derjenigen der N vorbestimmten Kombinationen der Komponenten R, G und B herbeizuführen, welche zur Sichtdarstellung — auf den genannten drei Videokanälen — der zur Darstellung gewünschten Farbe dient.

2. Gerät nach Anspruch 1, dadurch gekennzeichnet, daß die Identifikations- und Wiedergabemittel einen Analog-Digital-Umsetzer (8, 8A—8B) am Eingang jedes Video-Detektionskanals und einen programmierten Festwertspeicher (7) enthalten, der von den digitalen Ausgängen (SD, SDA—SDB) gespeist wird und drei Binärwörter abgibt, welche an drei ausgangsseitige Digital/Analog-Umsetzer (9, 10, 11) angelegt werden, wobei der Festwertspeicher mit einer vorbestimmten Entsprechungstabelle für die genannten N verschiedenen Kombinationen und die genannten N vorbestimmten Kombinationen von R, G und B, die für die Sichtdarstellung gewünscht werden, programmiert ist.

3. Gerät nach Anspruch 1 oder 2, dadurch gekennzeichnet, daß das Dokument auf der Trägereinrichtung gespeichert wird, indem allein die Luminanzkomponente verwendet wird, wobei die Analysemittel nur einen Video-Erfassungskanal (SV) enthalten.

4. Gerät nach Anspruch 3, dadurch gekennzeichnet, daß die Trägereinrichtung ein optischer Schwarz-Weiß-Film ist, worauf die genannten N verschiedenen Kombinationen N unterschiedliche Dichten (D1 bis DN) bilden.

5. Gerät nach Anspruch 4, dadurch gekennzeichnet, daß die Dichten so vorbestimmt sind, daß sie eine lineare stufenweise Variation des erfaßten Signals nach einer Stufenleiter mit konstantem Stufenabstand erzeugen.

6. Gerät nach Anspruch 4 oder 5, dadurch gekennzeichnet, daß die Analysevorrichtung in einer Ausführung mit Ablenkfleck-Analyseröhre eine Detektorvorrichtung umfaßt, die durch einen einfachen Photomultiplizierer gebildet ist, und bei einer Ausführung mit Leuchtquelle (2) eine Lesevorrichtung umfaßt, die durch eine Schwarz/Weiß-Fernsehkamera (5) gebildet ist.

7. Gerät nach Anspruch 1 oder 2, dadurch gekennzeichnet, daß das Dokument mit Kompression des Farbspektrums auf der Trägereinrichtung gespeichert ist, unter Verwendung von zwei Farbkomponenten, die vorzugsweise im Bereich Grün und Blau liegen.

8. Gerät nach Anspruch 7, dadurch gekennzeichnet, daß die Trägereinrichtung ein Farbfilm (30) ist, wobei die genannten N verschiedenen Kombinationen der zwei verwendeten Komponenten N verschiedene Dichten bilden.

9. Gerät nach einem der Ansprüche 4, 5, 6 und 8, dadurch gekennzeichnet, daß der Film eine Testspur (PT) bekannter Dichte enthält, um durch periodisches Auslesen dieser Spur eine Nachregelung der Helligkeit der Analysequelle (3, 33) des Lesers zu bewirken.

10. Gerät nach Anspruch 3, dadurch gekennzeichnet, daß die Trägereinrichtung ein Magnetband (42) ist, welches das Farbdokument enthält, welches auf einer einzigen Spur mittels eines Schwarz/Weiß-Film-Video-Auslesegerätes aufgezeichnet wurde, wobei das Dokument zuvor aufgezeichnet wurde, indem N verschiedene Dichten verwendet wurden, welche den genannten verschiedenen Kombinationen entsprechen, wobei das Gerät ein Schwarz/Weiß-Magnetoskop (40) umfaßt, welches mit dem genannten Band und mit den genannten Farb-Identifikations- und Wiedergabemitteln (6) ausgestattet ist.

## Claims

1. Display device for the visualization of a document of the cartographic type which is susceptible to present only a limited number N of distinct colors whereto N predetermined combinations of conventional color components red G, green G and blue B correspond, said document being stored on carrier means, the apparatus comprising an analyzing device, called reader, for the selection of the useful zone on the carrier means to be visualized in this document, reading the same point by point and supplying on three video channels the detected color components R, G, B to a visualization device of the color cathode ray tube type, the apparatur being characterized in that the color information of said document is stored by using a maximum of two color components, the N colors (C1 to CN) of the document being determined by N distinct combinations of said maximum of two color components which are used, the analyzing device being further equipped with a maximum of two video detection channels and color identification and restitution means (6) for the processing of the signals supplied by these channels in real time, point by point identification of said distinct combinations, and to establish, respectively, correspondence of that of the N determined combinations of the components R, G, B used for the visualization, on said three video channels, of the color desired for the representation.

2. Apparatus according to claim 1, characterized in that the identification and restitution means comprise an input analog-digital converter (8, 8A—8B) for each detected video channel, a programmed read onyl memory (7) driven by the digital outputs (SD,SDA—SDB) and supplying three binary words applied to three output digital-analog converters (9, 10, 11), the read only memory being programmed with a predetermined table of correspondence of said N distinct combinations to said N predetermined combinations of the R, G, B desired for the visualization.

3. Apparatus according to claims 1 or 2, characterized in that the document is stored on the carrier means by using only the luminance component, and the analyzing means comprising only one detected video channel (SV).

4. Apparatus according to claim 3, characterized in that the carrier means is an optical black and white film where said N distinct combinations form N distinct densities (D1 to DN).

5. Apparatus according to claim 4, characterized in that the densities are predetermined in order to produce a linear stepwiese variation of the detected signal according to a scale with constant increment.

6. Apparatus according to claims 4 or 5, characterized in that the analyzing device comprises, in an embodiment having a movable spot analyzing tube, a detecting device formed by a simple photomultiplier and, in an embodiment having a light source (2), a reading device formed by a black and white television camera (5).

7. Apparatus according to claims 1 or 2, characterized in that the document is stored on the carrier means with compression of the color spectrum by using two color components, preferably lying within the green and blue.

8. Apparatus according to claim 7, characterized in that the carrier means is a color film (30) where said N distinct combinations of the two components used form N distinct densities.

9. Apparatus according to any of claims 4, 5, 6 and 8, characterized in that the film comprises a test track (PT) of known density to produce, by periodic reading of this track, an intensity control of the analyzing source (3, 33) of the reader.

10. Apparatus according to claim 3, characterized in that the carrier means is a magnetic tape (42) comprising the color document which is stored on a single track by means of a black and white film video reader, where the document has previously been recorded by using N distinct densities corresponding to said distinct combinations, the apparatus comprising a black and white magnetoscope (40) equipped with said tape and said color identification and restitution means (6).

FIG_1

FIG_3

FIG_4

# FIG_2

# FIG_5